# EUROPEAN PATENT APPLICATION

(11) **EP 4 730 008 A1**
(43) Date of publication of application: **22.04.2026**
(21) Application number: 24822211.9
(22) Date of filing: 19.01.2024
(51) Int. Cl.: G02B 13/00, G02B 13/18, G02B 27/01

(54) **PROJECTION LENS**

(30) Priority: 14.06.2023 CN 202310704416
(71) Applicant: Jiangxi Lianchuang Electronic Co., Ltd., Nanchang, Jiangxi 330096 (CN)
(72) Inventor: LIANG, Liufeng, Nanchang, Jiangxi 330096 (CN); BAO, Yumin, Nanchang, Jiangxi 330096 (CN); WANG, Kemin, Nanchang, Jiangxi 330096 (CN)
(74) Representative: SONN Patentanwälte GmbH & Co KG
(86) International application number: PCT/CN2024/073336
(87) International publication number: WO 2024/255250

(57) **Abstract**

Provided is a projection lens assembly having eight lenses. The eight lenses comprise a first lens, a second lens, a third lens, a fourth lens, a fifth lens, a sixth lens, a seventh lens, and an eighth lens, which are arranged in sequence from a projection plane to an image-source plane along an optical axis. The first lens has positive focal power, and has a projection side surface being a convex surface; the second lens has negative focal power, and has an image-source side surface being a concave surface; the third lens has negative focal power, and has a projection side surface being a convex surface and an image-source side surface being a concave surface; the fourth lens has positive focal power, and has a projection side surface being a convex surface; the fifth lens has negative focal power, and has a projection side surface being a concave surface and an image-source side surface being a concave surface; the sixth lens has positive focal power, and has a projection side surface being a convex surface and an image-source side surface being a convex surface; the seventh lens has positive focal power, and has a projection side surface being a convex surface and an image-source side surface being a convex surface; the eighth lens has positive focal power, and has a projection side surface being a convex surface and an image-source side surface being a convex surface. The projection lens assembly provided in the present application, through configuration of the surface types of various lenses and reasonable matching of focal power of various lenses, has less distortion, improving the resolving power of the projection lens assembly, reducing aberrations, increasing relative illuminance, and having good projection effects.

## Description

This application claims priority to Chinese application No. 2023107044160, filed on June 14, 2023, the content of which is incorporated herein by reference in its entirety for all purposes.

### TECHNICAL FIELD

The present application relates to the technical field of imaging lens assembly, and in particular to a projection lens assembly.

### BACKGROUND

As consumer's demands for driving experience continue to increase, the application of in-vehicle projection lens assembly in intelligent driving is becoming more prevalent, and the status of in-vehicle projection lens assembly in the automotive related industry is continuously rising. The Head-Up Display (HUD), also known as the automotive head-up display system, utilizes optical reflection principles to display in a projection manner, driving assistance information, navigation information, inspection control information, and Advanced Driver Assistance System (ADAS) information onto the windshield glass or approximately 2 meters ahead or above the tip of the engine hood. Meanwhile it may also display warning messages from various driving assistance systems, such as lane departure warnings and pedestrian avoidance warnings from night vision assist systems with pedestrian recognition functions, preventing drivers from frequently looking down at the dashboard or in-vehicle screens during driving, and playing a significant auxiliary role in driving safety.

However, the projection lens assemblies used for high-end HUDs on the market suffer from defects leading to unclear patterns, such as high distortion, easily causing vignetting in the projected patterns, and insufficient brightness at the projection plane, making it difficult to meet usage requirements.

### SUMMARY

In view of the above problems, the objective of the present application is to provide a projection lens assembly with the advantage of good projection quality.

The present application provides a projection lens assembly, comprising eight lenses, the eight lenses comprise: a first lens, a second lens, a third lens, a fourth lens, a fifth lens, a sixth lens, a seventh lens, and an eighth lens, which are arranged in sequence from a projection plane to an image-source plane along an optical axis, wherein, the first lens has positive focal power, and has a projection side surface being a convex surface; the second lens has negative focal power, and has an image-source side surface being a concave surface; the third lens has negative focal power, and has a projection side surface being a convex surface and an image-source side surface being a concave surface; the fourth lens has positive focal power, and has a projection side surface being a convex surface; the fifth lens has negative focal power, and has a projection side surface being a concave surface and an image-source side surface being a concave surface; the sixth lens has positive focal power, and has a projection side surface being a convex surface and an image-source side surface being a convex surface; the seventh lens has positive focal power, and has a projection side surface being a convex surface and an image-source side surface being a convex surface; the eighth lens has positive focal power, and has a projection side surface being a convex surface and an image-source side surface being a convex surface; a throw ratio of the projection lens assembly ranges from 1.1 to 1.4.

Preferably, an effective focal length f and an optical back focal length BFL of the projection lens assembly satisfy: 2.4<BFL/f<2.6.

Preferably, a total optical length TTL of the projection lens assembly and a sum ΣCT of central thicknesses of the first to eighth lenses along the optical axis satisfy: 0.2 < ΣCT/TTL < 0.4.

Preferably, an effective focal length f of the projection lens assembly and a focal length f1 of the first lens satisfy: 2<f1/f<7.

The present application also provides a projection lens assembly, comprising eight lenses, the eight lenses comprise: a first lens, a second lens, a third lens, a fourth lens, a fifth lens, a sixth lens, a seventh lens, and an eighth lens, which are arranged in sequence from a projection plane to an image-source plane along an optical axis, wherein, the first lens has positive focal power, and has a projection side surface being a convex surface; the second lens has negative focal power, and has an image-source side surface being a concave surface; the third lens has negative focal power, and has a projection side surface being a convex surface and an image-source side surface being a concave surface; the fourth lens has positive focal power, and has a projection side surface being a convex surface; the fifth lens has negative focal power, and has a projection side surface being a concave surface and an image-source side surface being a concave surface; the sixth lens has positive focal power, and has a projection side surface being a convex surface and an image-source side surface being a convex surface; the seventh lens has positive focal power, and has a projection side surface being a convex surface and an image-source side surface being a convex surface; the eighth lens has positive focal power, and has a projection side surface being a convex surface and an image-source side surface being a convex surface; a total optical length TTL and an effective focal length f of the projection lens assembly satisfy: 5.5<TTL/f<6.0.

Preferably, the effective focal length f and an optical back focal length BFL of the projection lens assembly satisfy: 2.4<BFL/f<2.6.

Preferably, the total optical length TTL of the projection lens assembly and a sum ΣCT of central thicknesses of the first to eighth lenses along the optical axis satisfy: 0.2 < ΣCT/TTL < 0.4.

The present application also provides a projection lens assembly, comprising eight lenses, the eight lenses comprise: a first lens, a second lens, a third lens, a fourth lens, a fifth lens, a sixth lens, a seventh lens, and an eighth lens, which are arranged in sequence from a projection plane to an image-source plane along an optical axis, wherein, the first lens has positive focal power, and has a projection side surface being a convex surface; the second lens has negative focal power, and has an image-source side surface being a concave surface; the third lens has negative focal power, and has a projection side surface being a convex surface and an image-source side surface being a concave surface; the fourth lens has positive focal power, and has a projection side surface being a convex surface; the fifth lens has negative focal power, and has a projection side surface being a concave surface and an image-source side surface being a concave surface; the sixth lens has positive focal power, and has a projection side surface being a convex surface and an image-source side surface being a convex surface; the seventh lens has positive focal power, and has a projection side surface being a convex surface and an image-source side surface being a convex surface; the eighth lens has positive focal power, and has a projection side surface being a convex surface and an image-source side surface being a convex surface; an effective focal length f of the projection lens assembly, a maximum field of view FOV, and an image-source plane height IH corresponding to the maximum field of view satisfy: 0.96<(IH/2)/(f×tan(FOV/2))<1.0.

Preferably, the effective focal length f and an optical back focal length BFL of the projection lens assembly satisfy: 2.4<BFL/f<2.6.

Preferably, a total optical length TTL of the projection lens assembly and a sum ΣCT of central thicknesses of the first to eighth lenses along the optical axis satisfy: 0.2 < ΣCT/TTL < 0.4.

The present application also provides a projection lens assembly, comprising eight lenses, the eight lenses comprise: a first lens, a second lens, a third lens, a fourth lens, a fifth lens, a sixth lens, a seventh lens, and an eighth lens, which are arranged in sequence from a projection plane to an image-source plane along an optical axis, wherein, the first lens has positive focal power, and has a projection side surface being a convex surface; the second lens has negative focal power, and has an image-source side surface being a concave surface; the third lens has negative focal power, and has a projection side surface being a convex surface and an image-source side surface being a concave surface; the fourth lens has positive focal power, and has a projection side surface being a convex surface; the fifth lens has negative focal power, and has a projection side surface being a concave surface and an image-source side surface being a concave surface; the sixth lens has positive focal power, and has a projection side surface being a convex surface and an image-source side surface being a convex surface; the seventh lens has positive focal power, and has a projection side surface being a convex surface and an image-source side surface being a convex surface; the eighth lens has positive focal power, and has a projection side surface being a convex surface and an image-source side surface being a convex surface; a maximum field of view FOV and an f-number FNO of the projection lens assembly satisfy: 20° < FOV/FNO < 26°.

Preferably, an effective focal length f and an optical back focal length BFL of the projection lens assembly satisfy: 2.4<BFL/f<2.6.

Preferably, a total optical length TTL of the projection lens assembly and a sum ΣCT of central thicknesses of the first to eighth lenses along the optical axis satisfy: 0.2 < ΣCT/TTL < 0.4.

The present application also provides a projection lens assembly, comprising a diaphragm and eight lenses, the eight lenses comprise: a first lens, a second lens, a third lens, a fourth lens, a fifth lens, a sixth lens, a seventh lens and an eighth lens, which are arranged in sequence from a projection plane to an image-source plane along an optical axis, wherein, the first lens has positive focal power, and has a projection side surface being a convex surface; the second lens has negative focal power, and has an image-source side surface being a concave surface; the third lens has negative focal power, and has a projection side surface being a convex surface and an image-source side surface being a concave surface; the fourth lens has positive focal power, and has a projection side surface being a convex surface; the fifth lens has negative focal power, and has a projection side surface being a concave surface and an image-source side surface being a concave surface; the sixth lens has positive focal power, and has a projection side surface being a convex surface and an image-source side surface being a convex surface; the seventh lens has positive focal power, and has a projection side surface being a convex surface and an image-source side surface being a convex surface; the eighth lens has positive focal power, and has a projection side surface being a convex surface and an image-source side surface being a convex surface; the diaphragm is provided between the third lens and the fourth lens, or between the fourth lens and the fifth lens.

A plurality of lenses located between the diaphragm and the projection plane form a front lens group with negative focal power, and a plurality of lenses located between the diaphragm and the image-source plane form a rear lens group with positive focal power; a combined focal length F1 of the front lens group and a combined focal length F2 of the rear lens group satisfy: -5.0 < F1/F2 < -0.6.

Preferably, an effective focal length f and an optical back focal length BFL of the projection lens assembly satisfy: 2.4<BFL/f<2.6.

Preferably, a total optical length TTL of the projection lens assembly and a sum ΣCT of central thicknesses of the first to eighth lenses along the optical axis satisfy: 0.2 < ΣCT/TTL < 0.4.

The projection lens assembly provided in the present application has less distortion through the reasonable configuration of the surface types of various lenses and the reasonable matching of focal power of various lenses, thereby improving the resolving power of the projection lens assembly, reducing aberrations, and increasing relative illuminance, so that the projected image is uniform in brightness and higher in overall illuminance, avoiding the occurrence of vignetting, being beneficial for visibility under strong sunlight, and having good projection effects.

### BRIEF DESCRIPTION OF DRAWINGS

The above and/or additional aspects and advantages of the present application will become apparent and easily understood from the description of the embodiments in conjunction with the accompanying drawings, in which:
FIG. 1 is a structural schematic diagram of a projection lens assembly in Embodiment 1 of the present application.
FIG. 2 is a field curvature curve diagram of the projection lens assembly in Embodiment 1 of the present application.
FIG. 3 is an F-Tanθ distortion curve of the projection lens assembly in Embodiment 1 of this application.
FIG. 4 is a relative illuminance curve diagram of the projection lens assembly in Embodiment 1 of the present application.
FIG. 5 is an MTF curve diagram of the projection lens assembly in Embodiment 1 of the present application.
FIG. 6 is a lateral chromatic aberration curve diagram of the projection lens assembly in Embodiment 1 of the present application.
FIG. 7 is a structural schematic diagram of a projection lens assembly in Embodiment 2 of the present application.
FIG. 8 is a field curvature curve diagram of the projection lens assembly in Embodiment 2 of the present application.
FIG. 9 is an F-Tanθ distortion curve of the projection lens assembly in Embodiment 2 of this application.
FIG. 10 is a relative illuminance curve diagram of the projection lens assembly in Embodiment 2 of the present application.
FIG. 11 is an MTF curve diagram of the projection lens assembly in Embodiment 2 of the present application.
FIG. 12 is a lateral chromatic aberration curve diagram of the projection lens assembly in Embodiment 2 of the present application.
FIG. 13 is a structural schematic diagram of a projection lens assembly in Embodiment 3 of the present application.
FIG. 14 is a field curvature curve diagram of the projection lens assembly in Embodiment 3 of the present application.
FIG. 15 is an F-Tanθ distortion curve of the projection lens assembly in Embodiment 3 of this application.
FIG. 16 is a relative illuminance curve diagram of the projection lens assembly in Embodiment 3 of the present application.
FIG. 17 is an MTF curve diagram of the projection lens assembly in Embodiment 3 of this application.
FIG. 18 is a lateral chromatic aberration curve diagram of the projection lens assembly in Embodiment 3 of the present application.
FIG. 19 is a structural schematic diagram of a projection lens assembly in Embodiment 4 of the present application.
FIG. 20 is a field curvature curve diagram of the projection lens assembly in Embodiment 4 of the present application.
FIG. 21 is an F-Tanθ distortion curve of the projection lens assembly in Embodiment 4 of this application.
FIG. 22 is a relative illuminance curve diagram of the projection lens assembly in Embodiment 4 of the present application.
FIG. 23 is an MTF curve diagram of the projection lens assembly in Embodiment 4 of this application.
FIG. 24 is a lateral chromatic aberration curve diagram of the projection lens assembly in Embodiment 4 of the present application.

The following specific embodiments will further illustrate the present application in conjunction with the aforementioned drawings.

### DETAILED DESCRIPTION

To better understand the present application, various aspects of the present application will be described in more detail with reference to the accompanying drawings. It should be understood that these detailed descriptions are merely descriptions of the embodiments of the present application, and do not limit the scope of the present application in any way. Throughout the specification, the same reference numeral refers to the same element. The expression "and/or" includes any and all combinations of one or more of the associated listed items.

It should be noted that, in this specification, the expressions such as first, second, third, etc. are merely used to distinguish one feature from another, but do not represent any limitation to the features. Therefore, the first lens discussed below may also be referred to as the second lens or the third lens without departing from the teachings of the present application.

In the drawings, the thickness, size, and shape of the lenses have been slightly exaggerated for ease of explanation. Specifically, the shapes of spherical or aspherical surfaces shown in the drawings are illustrated by way of example. That is, the shapes of spherical or aspherical surfaces are not limited to those shown in the drawings. The drawings serve merely as examples and are not drawn to scale strictly.

In this disclosure, the paraxial region refers to the region near the optical axis. When the lens surface is convex and the position of the convex surface is not defined, it indicates that the lens surface is convex at least in the paraxial region. When the lens surface is concave and the position of the concave surface is not defined, it indicates that the lens surface is concave at least in the paraxial region. The surface of each lens closest to the projection plane is called the projection side surface of the lens, and the surface of each lens closest to the image-source plane is called the image-source side surface of the lens.

It should also be understood that the terms "comprise", "comprising", "having", "include" and/or "including", when used in this specification, indicate the presence of stated features, elements and/or components, but do not exclude the presence or addition of one or more other features, elements, components and/or combinations thereof. Furthermore, when an expression such as "at least one of..." appear before a list of enumerated features, it applies to the entire list of enumerated features, rather than individual elements within the list. Additionally, when describing embodiments of the present application, the use of "may" or "can" indicates "one or more embodiments of the present application". Furthermore, the word "exemplary" is intended to refer to examples or illustrations.

Unless otherwise defined, all terms (including technical terms and scientific terms) used herein have the same meaning as commonly understood by one of ordinary skill in the art to which the present application belongs. It should also be understood that terms (such as those defined in commonly used dictionaries) should be interpreted as having meanings consistent with their meanings in the context of the related art, and will not be interpreted in an idealized or overly formal sense unless otherwise explicitly defined as such herein.

It should be noted that, in the absence of conflict, the embodiments and the features in the embodiments of the present application may be combined with each other. The present application will be described in detail below with reference to the accompanying drawings and in combination with embodiments.

The projection lens assembly according to the embodiments of the present application includes a diaphragm and eight lenses, including: a first lens, a second lens, a third lens, a fourth lens, a fifth lens, a sixth lens, a seventh lens, an eighth lens, and an optical filter, which are arranged in sequence from the projection plane to the image-source plane along the optical axis. The diaphragm is arranged between the third lens and the fourth lens, or between the fourth lens and the fifth lens, and is capable of narrowing the range of light beams and reducing the generation of astigmatism in the projection lens assembly. Multiple lenses located between the diaphragm and the projection plane form a front lens group with negative focal power, and multiple lenses located between the diaphragm and the image-source plane form a rear lens group with positive focal power.

In some embodiments, the first lens may have positive focal power, and a projection side surface thereof is a convex surface, which can effectively reduce the total optical length of the projection lens assembly, at the same time is beneficial for suppressing the angle at which the light from the peripheral field of view is incident on the projection plane, and effectively transmits more light beams to the projection plane, thereby improving the projection quality of the projection lens assembly.

In some embodiments, the second lens may have negative focal power, and an image-source side surface thereof is a concave surface, which is beneficial for increasing the projection area of the projection lens assembly and can balance the aberrations of the projection lens assembly, thereby improving the projection quality of the projection lens assembly.

In some embodiments, the third lens may have negative focal power, a projection side surface thereof is a convex surface, and an image-source side surface is a concave surface, which can converge the telecentric beam from the image-source plane, reduces the deflection angle of light beams, and allows a smooth transition of light path, thereby improving the projection quality of the projection lens assembly.

In some embodiments, the fourth lens may have positive focal power, and a projection side surface thereof is a convex surface, which can balance the aberrations of the projection lens assembly, thereby improving the projection quality of the projection lens assembly.

In some embodiments, the fifth lens may have negative focal power, and both a projection side surface and an image-source side surface thereof are concave surfaces, which can converge the telecentric beam from the image-source plane, and is beneficial for enhancing the relative illuminance of the projection plane, thereby improving the projection quality of the projection lens assembly.

In some embodiments, the sixth lens may have positive focal power, and both a projection side surface and an image-source side surface thereof are convex surfaces, which is beneficial for reducing the deflection angle of light beams, allows a smooth transition of light path, and at the same time can balance the aberrations of the projection lens assembly, thereby improving the projection quality of the projection lens assembly.

In some embodiments, the seventh lens may have positive focal power, and both a projection side surface and an image-source side surface thereof are convex surfaces, which is beneficial for reducing the deflection angle of light beams, allows a smooth transition of light path, and at the same time can balance the aberrations of the projection lens assembly, thereby improving the projection quality of the projection lens assembly.

In some embodiments, the eighth lens may have positive focal power, and both a projection side surface and an image-source side surface thereof are convex surfaces, which is beneficial for converging light beams while reducing the deflection angle of the light beams, and allows a smooth transition of light path, thereby improving the projection quality of the projection lens assembly.

In some embodiments, the throw ratio of the projection lens assembly ranges from 1.1 to 1.4. Meeting the aforementioned condition may allow the distance between the projection lens assembly and the projection screen to reach a small size, achieves larger-sized image display within a shorter projection distance while making the projection lens assembly have better resolving power. The throw ratio refers to a ratio between the projection distance and the horizontal size of the projected picture; and a small ratio indicates a wider projected picture for the same projection distance.

In some embodiments, the total optical length TTL and the effective focal length f of the projection lens assembly satisfy: 5.5 < TTL/f < 6.0. By satisfying the aforementioned condition, the total optical length of the projection lens assembly can be controlled to be relatively short, and the object distance is relatively short, thereby ensuring, to a certain extent, a smaller volume size of the projection lens assembly, and making the projection lens assembly easy to install and use.

In some embodiments, the effective focal length f of the projection lens assembly, the maximum field of view FOV, and the image-source plane height IH corresponding to the maximum field of view satisfy: 0.96 < (IH/2)/(f × tan(FOV/2)) < 1.0. By satisfying the aforementioned condition, the optical distortion of the projection lens assembly can be controlled, so that the projected picture has less distortion. The distortion of the projection lens assembly can be controlled to be within 4%, a better projection effect can be achieved, which is more suitable for human eye viewing.

In some embodiments, the maximum field of view FOV and the f-number FNO of the projection lens assembly satisfy: 20° < FOV/FNO < 26°. By satisfying the aforementioned condition, the relative illuminance of the projection lens assembly can be controlled, so that the projected picture is uniform in brightness and is higher in overall illuminance, which is beneficial for visibility under strong sunlight.

In some embodiments, the combined focal length F1 of the front lens group and the combined focal length F2 of the rear lens group satisfy: -5.0 < F1/F2 < -0.6. By satisfying the aforementioned condition, the distribution of combined focal lengths in front of and behind the diaphragm of the projection lens assembly can be controlled, which is beneficial for improving various aberrations of the projection lens assembly, thereby increasing the resolving power of the projection lens assembly.

In some embodiments, the effective focal length f of the projection lens assembly and the optical back focal length BFL satisfy: 2.4 < BFL/f < 2.6. Satisfying the aforementioned condition is beneficial for achieving a balance between good imaging quality and an easily assembled optical back focal length, which avoids the interference between the lens and other components while ensuring the imaging quality of the projection lens assembly, and reduces the difficulty of the assembly process for the camera module.

In some embodiments, the total optical length TTL of the projection lens assembly and the sum ΣCT of the central thicknesses of the first to eighth lenses along the optical axis satisfy: 0.2 < ΣCT/TTL < 0.4. Satisfying the aforementioned condition is beneficial for the structural design and production process of the projection lens assembly.

In some embodiments, the effective focal length f of the projection lens assembly and the focal length f1 of the first lens satisfy: 2 < f1/f < 7. By satisfying the aforementioned condition, the first lens may have appropriate positive focal power, and effectively compress the total optical length of the projection lens assembly, at the same time is beneficial for suppressing the angle at which the light from the peripheral field of view is incident on the projection plane, and effectively transmits more light beams to the projection plane, thereby improving the projection quality of the projection lens assembly.

In some embodiments, the effective focal length f of the projection lens assembly and the focal length f2 of the second lens satisfy: -2.0 < f2/f < -0.9. By satisfying the aforementioned condition, the second lens may have appropriate negative focal power, which is beneficial for increasing the projection area of the projection lens assembly, and can balance the aberrations of the projection lens assembly, thereby improving the projection quality of the projection lens assembly.

In some embodiments, the effective focal length f of the projection lens assembly and the focal length f3 of the third lens satisfy: -4.0 < f3/f < -1.9. By satisfying the aforementioned condition, the third lens may have appropriate negative focal power, which can converge the telecentric beam from the image-source plane, reduces the deflection angle of light beams, and allows a smooth transition of light path, thereby improving the projection quality of the projection lens assembly.

In some embodiments, the effective focal length f of the projection lens assembly and the focal length f4 of the fourth lens satisfy: 2.0 < f4/f < 4.0. By satisfying the aforementioned condition, the fourth lens may have appropriate positive focal power, which reduces the deflection angle of light beams while converging the light beams, allows a smooth transition of light path, and at the same time balances various aberrations generated by the projection lens assembly, thereby improving the imaging quality of the projection lens assembly.

In some embodiments, the effective focal length f of the projection lens assembly and the focal length f5 of the fifth lens satisfy: -1.6 < f5/f < -1.0. By satisfying the aforementioned condition, the fifth lens may have appropriate negative focal power, which can converge the telecentric beam from the image-source plane, and is beneficial for enhancing the relative illuminance of the projection plane, thereby improving the projection quality of the projection lens assembly.

In some embodiments, the effective focal length f of the projection lens assembly and the focal length f6 of the sixth lens satisfy: 1.3 < f6/f < 1.6. By satisfying the aforementioned condition, the sixth lens may have appropriate positive focal power, which is beneficial for reducing the deflection angle of light beams, allows a smooth transition of light path, and at the same time can balance the aberrations of the projection lens assembly, thereby improving the projection quality of the projection lens assembly.

In some embodiments, the effective focal length f of the projection lens assembly and the focal length f7 of the seventh lens satisfy: 3.5 < f7/f < 10.0. By satisfying the aforementioned condition, the seventh lens may have appropriate positive focal power, which is beneficial for reducing the deflection angle of light beams, allows a smooth transition of light path, and at the same time can balance the aberrations of the projection lens assembly, thereby improving the projection quality of the projection lens assembly.

In some embodiments, the effective focal length f of the projection lens assembly and the focal length f8 of the eighth lens satisfy: 2.3 < f8/f < 3.5. By satisfying the aforementioned range, the eighth lens may have appropriate positive focal power, which is beneficial for converging light beams while reducing the deflection angle of the light beams, and allows a smooth transition of light path, thereby improving the projection quality of the projection lens assembly.

In some embodiments, the total optical length TTL of the projection lens assembly and the image-source plane height (IH) corresponding to the maximum field of view satisfy 7.5 < TTL/IH < 8.5, which can effectively balance the requirements of a large image-source plane and a lens size for the projection lens assembly.

In some embodiments, the image-source plane height (IH) corresponding to the maximum field of view of the projection lens assembly and the entrance pupil diameter EPD satisfy: 1.2 < IH/EPD < 1.4. Satisfying the aforementioned condition can increase the width of the light beam entering the projection lens assembly, so that the projection lens assembly may improve brightness at the image plane, avoiding the occurrence of vignetting.

In some embodiments, the effective focal length f of the projection lens assembly and the image-source plane height IH corresponding to the maximum field of view satisfy: 0.65 < IH/f < 0.8. By satisfying the aforementioned condition, the projection lens assembly can match a large image-source plane and has good imaging quality during projection.

In some embodiments, the fifth lens and the sixth lens may be cemented to form a cemented lens, which may effectively correct the chromatic aberration of the projection lens assembly, reduce the eccentricity sensitivity of the projection lens assembly, balance the aberrations of the projection lens assembly, and improve the projection quality of the projection lens assembly. This configuration may also reduce the assembly sensitivity of the projection lens assembly, thereby reducing the processing difficulty of the projection lens assembly and improving the assembly yield rate of the projection lens assembly.

The present application is further described below through a number of embodiments. In various embodiments, the thickness, radius of curvature, and material selection of each lens in the projection lens assembly are partly different. For specific differences, please refer to the parameter tables of various embodiments. The following embodiments are merely preferred implementation modes of the present application, but the implementation modes of the present application are not limited to the following embodiments. Any other changes, substitutions, combinations or simplifications that do not deviate from the innovative concept of the present application should be regarded as equivalent replacements and are included in the scope of protection of the present application.

### Embodiment 1

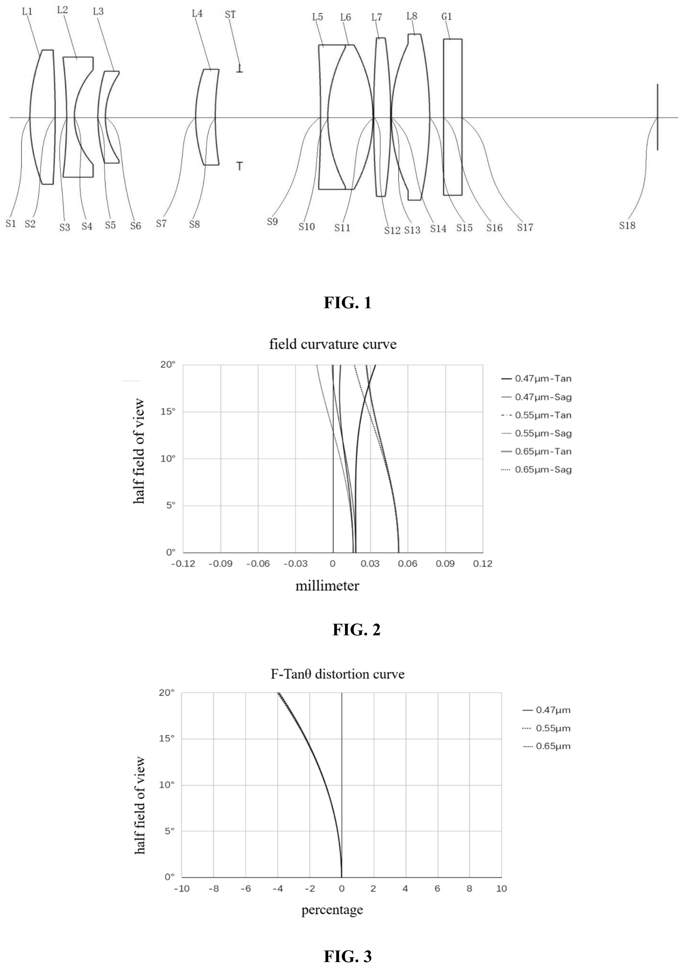

Please refer to FIG. 1, which illustrates the structural schematic diagram of the projection lens assembly provided in Embodiment 1 of the present application. The projection lens assembly includes: a first lens L1, a second lens L2, a third lens L3, a fourth lens L4, a diaphragm ST, a fifth lens L5, a sixth lens L6, a seventh lens L7, an eighth lens L8, and an optical filter G1, which are arranged in sequence from the projection plane to the image-source plane along the optical axis. The first lens L1, the second lens L2, the third lens L3, and the fourth lens L4 form a front lens group with negative focal power. The first lens L1 has positive focal power, and both a projection side surface S1 and an image-source side surface S2 thereof are convex surfaces; the second lens L2 has negative focal power, and both a projection side surface S3 and an image-source side surface S4 thereof are concave surfaces; the third lens L3 has negative focal power, a projection side surface S5 thereof is a convex surface, and an image-source side surface S6 thereof is a concave surface; the fourth lens L4 has positive focal power, a projection side surface S7 thereof is a convex surface, and an image-source side surface S8 thereof is a concave surface.

The fifth lens L5, the sixth lens L6, the seventh lens L7, and the eighth lens L8 form a rear lens group with positive focal power. The fifth lens L5 has negative focal power, and both a projection side surface S9 and an image-source side surface S10 thereof are concave surfaces; the sixth lens L6 has positive focal power, and both a projection side surface S10 and an image-source side surface S11 thereof are convex surfaces; the fifth lens L5 and the sixth lens L6 form a cemented lens group, where the cemented surface between the image-source side surface of the fifth lens L5 and the projection side surface of the sixth lens L6 is denoted as S10; the seventh lens L7 has positive focal power, and both a projection side surface S12 and an image-source side surface S13 thereof are convex surfaces; the eighth lens L8 has positive focal power, and both a projection side surface S14 and an image-source side surface S15 thereof are convex surfaces.

Both a projection side surface S16 and an image-source side surface S17 of the optical filter G1 are planes.

The image-source plane S18 is a plane.

The relevant parameters of each lens in the projection lens assembly of Embodiment 1 are shown in Table 1-1.

**Table 1-1**

| Surface number | Surface name | Surface type | Radius of curvature R (mm) | Thickness D/distance L (mm) | Refractive index Nd | Abbe number Vd |
|---|---|---|---|---|---|---|
| | projection plane | plane | infinite | 140.36 | | |
| S1 | first lens L1 | spherical surface | 32.59 | 3.27 | 1.83 | 42.73 |
| S2 | | spherical surface | -184.12 | 1.49 | | |
| S3 | second lens L2 | spherical surface | -85.09 | 1.00 | 1.60 | 60.63 |
| S4 | | spherical surface | 11.62 | 3.06 | | |
| S5 | third lens L3 | spherical surface | 28.05 | 0.96 | 1.67 | 48.43 |
| S6 | | spherical surface | 12.84 | 11.72 | | |
| S7 | fourth lens L4 | spherical surface | 25.28 | 2.54 | 1.85 | 23.79 |
| S8 | | spherical surface | 52.18 | 3.15 | | |
| ST | diaphragm ST | plane | infinite | 10.52 | | |
| S9 | fifth lens L5 | spherical surface | -199.27 | 0.93 | 2.00 | 25.44 |
| S10 | sixth lens L6 | spherical surface | 25.05 | 5.86 | 1.59 | 68.35 |
| S11 | | spherical surface | -25.05 | 0.09 | | |
| S12 | seventh lens L7 | spherical surface | 187.22 | 2.21 | 1.70 | 56.20 |
| S13 | | spherical surface | -99.28 | 0.09 | | |
| S14 | eighth lens L8 | spherical surface | 29.10 | 4.96 | 1.60 | 65.46 |
| S15 | | spherical surface | -67.29 | 1.80 | | |
| S16 | optical filter G1 | plane | infinite | 2.40 | 1.50 | 63.40 |
| S17 | | plane | infinite | 25.37 | | |
| S18 | image-source plane | plane | infinite | | | |

In this embodiment, the field curvature curve diagram, F-Tanθ distortion curve, relative illuminance curve diagram, MTF curve diagram, and lateral chromatic aberration curve diagram of the projection lens assembly are shown in FIGS. 2, 3, 4, 5, and 6, respectively.

FIG. 2 illustrates the field curvature curve of Embodiment 1, which represents the bending degree of light beams of different wavelengths on the meridional and sagittal image planes. The horizontal axis represents the offset (unit: mm), and the vertical axis represents the half field of view (unit: °). It can be seen from the figure that the field curvatures on both the meridional and sagittal image planes are controlled within ±0.06mm, indicating that the projection lens assembly can effectively correct the field curvatures.

FIG. 3 illustrates the F-Tanθ distortion curve of Embodiment 1, which represents the F-Tanθ distortion of light beams with different wavelengths at different image heights on the projection plane. The horizontal axis represents the F-Tanθ distortion (unit: %), while the vertical axis represents the half field of view (unit: °). It can be seen from the figure that the F-Tanθ distortion of the projection lens assembly is controlled within -4% to 0, and the image compression in the peripheral angle area is relatively smooth, which effectively improves the clarity of the expanded image.

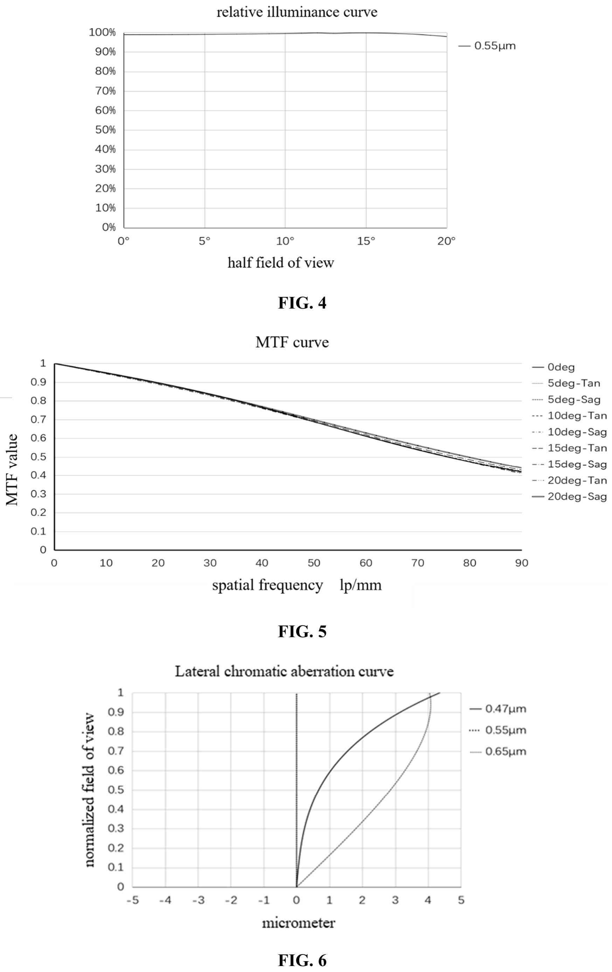

FIG. 4 illustrates the relative illuminance curve of Embodiment 1, which represents the relative illuminance values at different angles of the field of view on the projection plane. The horizontal axis represents the half field of view (unit: °), and the vertical axis represents the relative illuminance (unit: %). It can be seen from the figure that the relative illuminance value of the projection lens assembly is still greater than 95% at the maximum half field of view, indicating that the projection lens assembly has good relative illuminance.

FIG. 5 illustrates the Modulation Transfer Function (MTF) curve diagram of Embodiment 1, which represents the imaging modulation degree of the lens assembly at different spatial frequencies under various fields of view. The horizontal axis represents the spatial frequency (unit: lp/mm), while the vertical axis represents the MTF value. It can be seen from the figure that the MTF value of this embodiment remains above 0.4 across the entire field of view. Within the range of 0 to 160 lp/mm, the MTF curve evenly and smoothly decreases from the center to the peripheral field of view, and exhibits superior imaging quality and excellent capability to resolve details in both low-frequency and high-frequency situations.

FIG. 6 illustrates the lateral chromatic aberration curve diagram of Embodiment 1, which represents the chromatic aberrations of various wavelengths relative to the central wavelength (0.55µm) at different image heights on the projection plane. The horizontal axis represents the lateral chromatic aberration values (unit: µm) of various wavelengths relative to the central wavelength, while the vertical axis represents the normalized field of view. It can be seen from the figure that the lateral chromatic aberrations of the longest and shortest wavelengths are controlled within 0 to 5µm, indicating that the projection lens assembly can effectively correct chromatic aberrations in the peripheral field of view and the secondary spectrum of the entire image plane.

### Embodiment 2

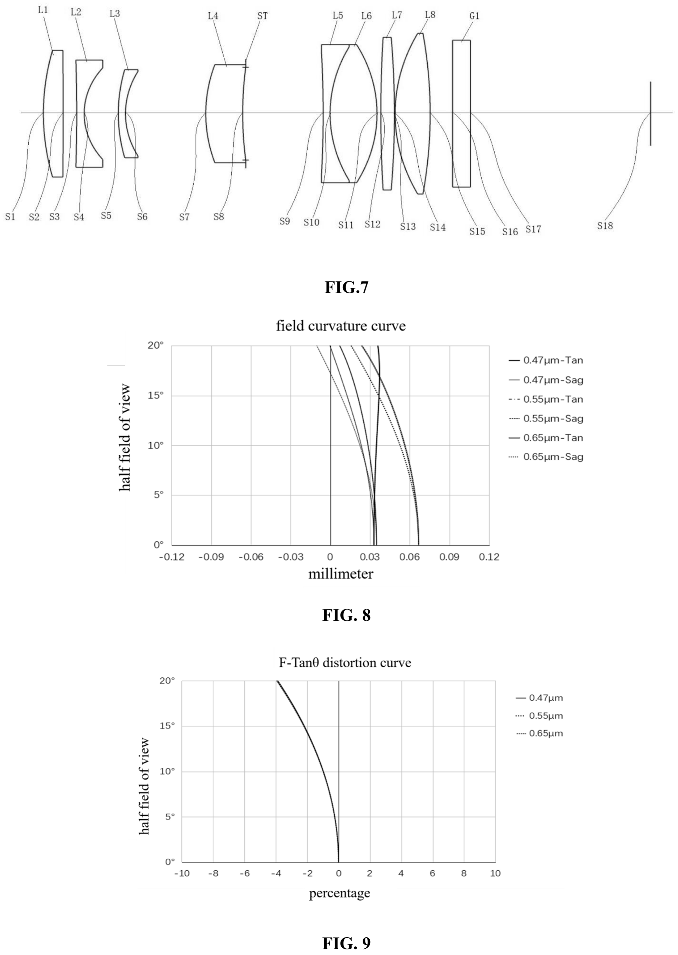

Please refer to FIG. 7, which illustrates the structural schematic diagram of the projection lens assembly provided in Embodiment 2 of the present application. Compared to Embodiment 1, Embodiment 2 mainly differs in optical parameters such as the radius of curvature of each lens surface and lens thickness.

The relevant parameters of each lens in the projection lens assembly of Embodiment 2 are shown in Table 2-1.

**Table 2-1**

| Surface number | Surface name | Surface type | Radius of curvature R (mm) | Thickness D / distance L (mm) | Refractiv e index Nd | Abbe numbe r Vd |
|---|---|---|---|---|---|---|
| | projection plane | plane | infinite | 140.36 | | |
| S1 | first lens L1 | spherical surface | 39.75 | 2.65 | 1.83 | 42.73 |
| S2 | | spherical surface | -1097.10 | 1.82 | | |
| S3 | second lens L2 | spherical surface | -312.68 | 1.00 | 1.61 | 58.60 |
| S4 | | spherical surface | 11.30 | 4.58 | | |
| S5 | third lens L3 | spherical surface | 27.46 | 0.96 | 1.67 | 48.43 |
| S6 | | spherical surface | 13.58 | 10.77 | | |
| S7 | fourth lens | spherical surface | 24.22 | 4.95 | 1.85 | 23.79 |
| S8 | L4 | spherical surface | 63.79 | 0.40 | | |
| ST | diaphragm ST | plane | infinite | 10.39 | | |
| S9 | fifth lens L5 | spherical surface | -196.83 | 0.93 | 2.00 | 25.44 |
| S10 | sixth lens L6 | spherical surface | 22.16 | 6.29 | 1.59 | 68.35 |
| S11 | | spherical surface | -22.16 | 0.51 | | |
| S12 | seventh lens L7 | spherical surface | 228.84 | 1.83 | 1.70 | 55.53 |
| S13 | | spherical surface | -159.89 | 0.09 | | |
| S14 | eighth lens L8 | spherical surface | 26.92 | 4.70 | 1.60 | 65.46 |
| S15 | | spherical surface | -80.00 | 3.00 | | |
| S16 | optical filter G1 | plane | infinite | 2.40 | 1.50 | 63.40 |
| S17 | | plane | infinite | 24.16 | | |
| S18 | image-sour ce plane | plane | infinite | | | |

In this embodiment, the field curvature curve diagram, F-Tanθ distortion curve, relative illuminance curve diagram, MTF curve diagram, and lateral chromatic aberration curve diagram of the projection lens assembly are shown in FIGS. 8, 9, 10, 11, and 12, respectively.

FIG. 8 illustrates the field curvature curve diagram of Embodiment 2, which represents the degree of bending of light beams with different wavelengths on the meridional and sagittal image planes. The horizontal axis represents the offset (unit: mm), and the vertical axis represents the half field of view (unit: °). It can be seen from the figure that the field curvatures on both the meridional and sagittal image planes are controlled within -0.03mm to 0.09mm, indicating that the projection lens assembly can effectively correct the field curvatures.

FIG. 9 illustrates the F-Tanθ distortion curve of Embodiment 2, which represents the F-Tanθ distortion of light beams with different wavelengths at different image heights on the projection plane. The horizontal axis represents the F-Tanθ distortion (unit: %), and the vertical axis represents the half field of view (unit: °). It can be seen from the figure that the F-Tanθ distortion of the projection lens assembly is controlled within -4% to 0, and the image compression in the peripheral angle area is relatively smooth, which effectively improves the clarity of the expanded image.

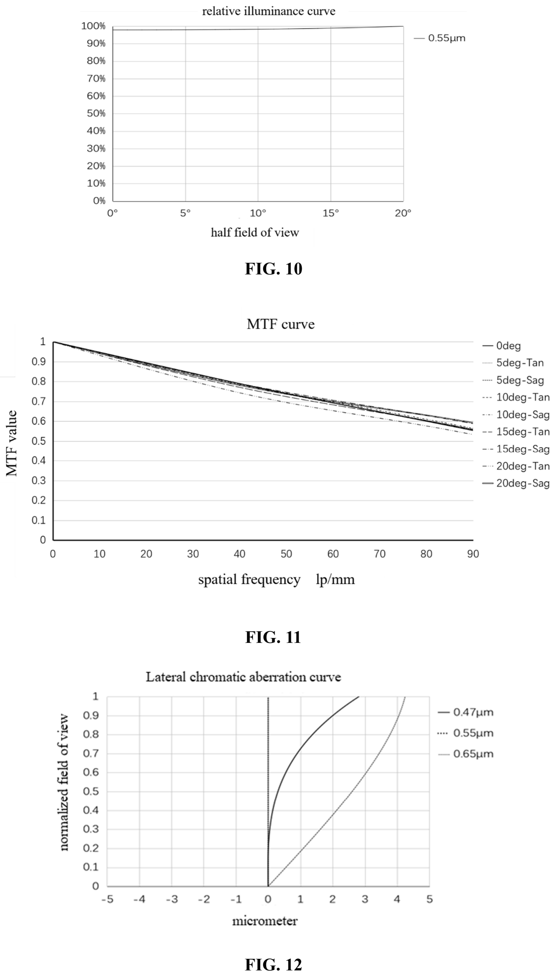

FIG. 10 illustrates the relative illuminance curve of Embodiment 2, which represents the relative illuminance values at different angles of the field of view on the projection plane. The horizontal axis represents the half field of view (unit: °), and the vertical axis represents the relative illuminance (unit: %). It can be seen from the figure that the relative illuminance value of the projection lens assembly is still greater than 95% at the maximum half field of view, indicating that the projection lens assembly has good relative illuminance.

FIG. 11 illustrates the Modulation Transfer Function (MTF) curve diagram of Embodiment 2, which represents the imaging modulation degree of the lens assembly at different spatial frequencies under various fields of view. The horizontal axis represents the spatial frequency (unit: lp/mm), and the vertical axis represents the MTF value. It can be seen from the figure that the MTF value of this embodiment remains above 0.5 across the entire field of view. Within the range of 0 to 160 lp/mm, the MTF curve evenly and smoothly decreases from the center to the peripheral field of view, and exhibits superior imaging quality and excellent capability to resolve details in both low-frequency and high-frequency situations.

FIG. 12 illustrates the lateral chromatic aberration curve diagram of Embodiment 2, which represents the chromatic aberrations of various wavelengths relative to the central wavelength (0.55µm) at different image heights on the projection plane. The horizontal axis represents the lateral chromatic aberration values (unit: µm) of various wavelength relative to the central wavelength, while the vertical axis represents the normalized field of view. It can be seen from the figure that the lateral chromatic aberrations of the longest and shortest wavelengths are controlled within 0 to 5µm, indicating that the projection lens assembly can effectively correct chromatic aberrations in the peripheral field of view and the secondary spectrum of the entire image plane.

### Embodiment 3

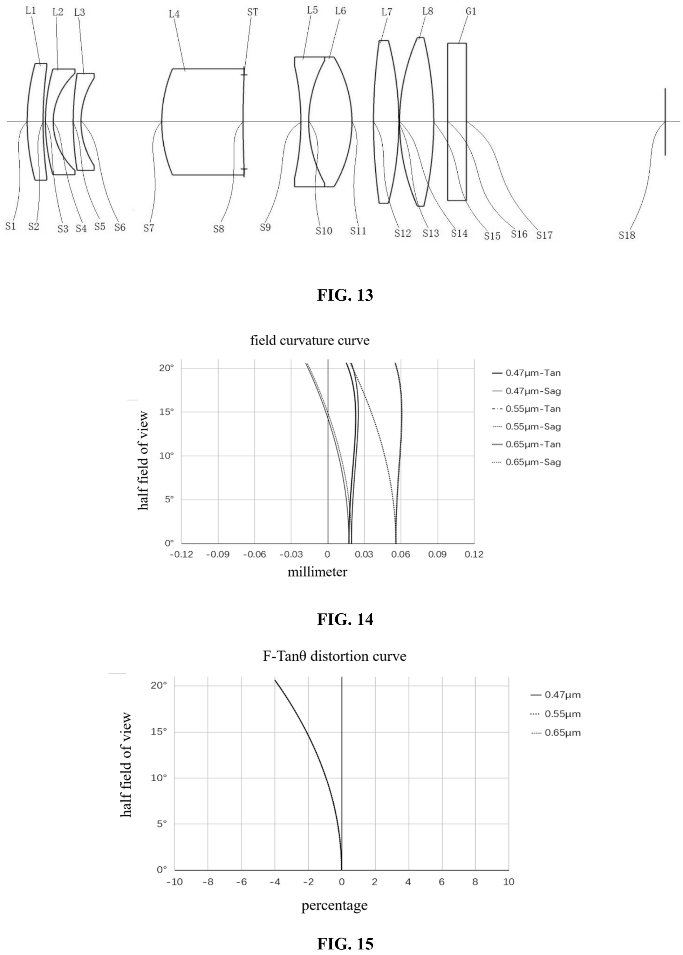

Please refer to FIG. 13, which illustrates the structural schematic diagram of the projection lens assembly provided in Embodiment 3 of the present application. The projection lens assembly includes: a first lens L1, a second lens L2, a third lens L3, a fourth lens L4, a diaphragm ST, a fifth lens L5, a sixth lens L6, a seventh lens L7, an eighth lens L8, and an optical filter G1, which are arranged in sequence from the projection plane to the image-source plane along the optical axis. The first lens L1, the second lens L2, the third lens L3, and the fourth lens L4 form a front lens group with negative focal power. The first lens L1 has positive focal power, a projection side surface S1 thereof is a convex surface, and an image-source side surface S2 thereof is a concave surface; the second lens L2 has negative focal power, a projection side surface S3 thereof is a convex surface, and an image-source side surface S4 thereof is a concave surface; the third lens L3 has negative focal power, a projection side surface S5 thereof is a convex surface, and an image-source side surface S6 thereof is a concave surface; the fourth lens L4 has positive focal power, a projection side surface S7 thereof is a convex surface, and an image-source side surface S8 thereof is a concave surface.

The fifth lens L5, the sixth lens L6, the seventh lens L7, and the eighth lens L8 form a rear lens group with positive focal power. The fifth lens L5 has negative focal power, and both a projection side surface S9 and an image-source side surface S10 thereof are concave surfaces; the sixth lens L6 has positive focal power, and both a projection side surface S10 and an image-source side surface S11 thereof are convex surfaces; the fifth lens L5 and the sixth lens L6 form a cemented lens group, where the cemented surface between the image-source side surface of the fifth lens L5 and the projection side surface of the sixth lens L6 is denoted as S10; the seventh lens L7 has positive focal power, and both a projection side surface S12 and an image-source side surface S13 thereof are convex surfaces; the eighth lens L8 has positive focal power, and both a projection side surface S14 and an image-source side surface S15 thereof are convex surfaces.

Both a projection side surface S16 and an image-source side surface S17 of the optical filter G1 are planes.

The image-source plane S18 is a plane.

The relevant parameters of each lens in the projection lens assembly of Embodiment 3 are shown in Table 3-1.

**Table 3-1**

| Surface number | Surface name | Surface type | Radius of curvature R (mm) | Thickness D/distance L (mm) | Refractiv e index Nd | Abbe number Vd |
|---|---|---|---|---|---|---|
| | projection plane | plane | infinite | 140.37 | | |
| S1 | first lens L1 | spherical surface | 37.02 | 2.03 | 1.83 | 42.73 |
| S2 | | spherical surface | 70.72 | 0.30 | | |
| S3 | Second lens L2 | spherical surface | 32.23 | 0.99 | 1.60 | 60.63 |
| S4 | | spherical surface | 10.60 | 2.55 | | |
| S5 | third lens L3 | spherical surface | 51.18 | 0.99 | 1.66 | 50.87 |
| S6 | | spherical surface | 13.20 | 10.31 | | |
| S7 | fourth lens | spherical surface | 22.96 | 10.37 | 1.85 | 23.79 |
| S8 | L4 | spherical surface | 171.44 | 0.14 | | |
| ST | diaphragm ST | plane | infinite | 7.25 | | |
| S9 | fifth lens L5 | spherical surface | -42.81 | 0.99 | 2.00 | 25.44 |
| S10 | sixth lens L6 | spherical surface | 21.07 | 5.52 | 1.59 | 68.35 |
| S11 | | spherical surface | -21.07 | 2.75 | | |
| S12 | seventh lens L7 | spherical surface | 97.89 | 3.23 | 1.70 | 56.20 |
| S13 | | spherical surface | -54.64 | 0.10 | | |
| S14 | eighth lens L8 | spherical surface | 34.99 | 4.36 | 1.60 | 65.46 |
| S15 | | spherical surface | -61.59 | 1.78 | | |
| S16 | optical filter G1 | plane | infinite | 2.40 | 1.50 | 63.40 |
| S17 | | plane | infinite | 25.35 | | |
| S18 | image-sour ce plane | plane | infinite | | | |

In this embodiment, the field curvature curve diagram, F-Tanθ distortion curve, relative illuminance curve diagram, MTF curve diagram, and lateral chromatic aberration curve diagram of the projection lens assembly are shown in FIG.s 14, 15, 16, 17, and 18, respectively.

FIG. 14 illustrates the field curvature curve of Embodiment 3, which represents the degree of bending of light beams with different wavelengths on the meridional and sagittal image planes. The horizontal axis indicates the offset (unit: mm), while the vertical axis represents the half field of view (unit: °). It can be seen from the figure that the field curvatures on both the meridional and sagittal image planes are controlled within -0.03mm to 0.07mm, indicating that the projection lens assembly can effectively correct the field curvature.

FIG. 15 illustrates the F-Tanθ distortion curve of Embodiment 3, which represents the F-Tanθ distortion of light beams with different wavelengths at various image heights on the projection plane. The horizontal axis represents the F-Tanθ distortion (unit: %), while the vertical axis represents the half field of view (unit: °). It can be seen from the figure that the F-Tanθ distortion of the projection lens assembly is controlled within -4% to 0, and the image compression in the peripheral angle area is relatively smooth, which effectively improves the clarity of the expanded image.

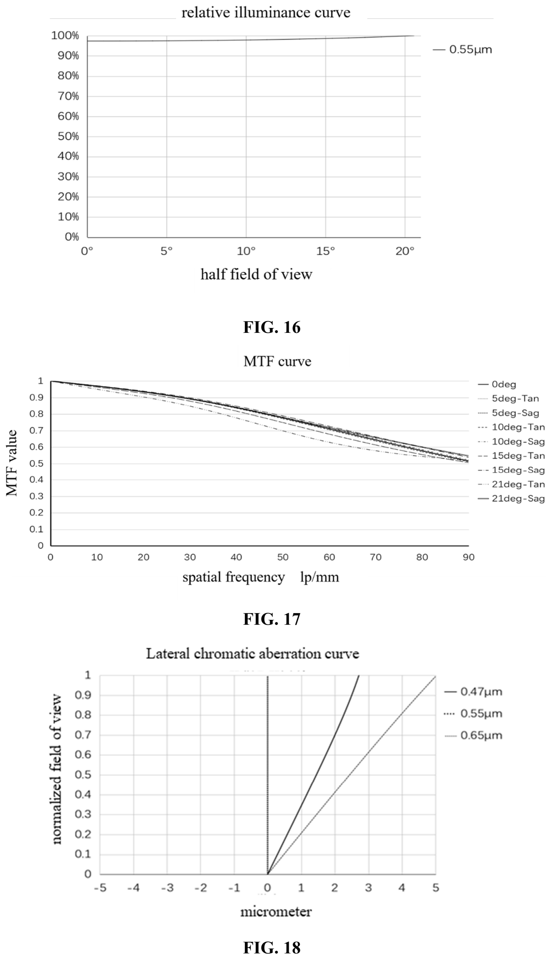

FIG. 16 illustrates the relative illuminance curve of Embodiment 3, which represents the relative illuminance values at different angles of the field of view on the projection plane. The horizontal axis represents the half field of view (unit: °), and the vertical axis represents the relative illuminance (unit: %). It can be seen from the figure that the relative illuminance value of the projection lens assembly is still greater than 95% at the maximum half field of view, indicating that the projection lens assembly has good relative illuminance.

FIG. 17 illustrates the Modulation Transfer Function (MTF) curve diagram of Embodiment 3, which represents the imaging modulation degree of the lens at different spatial frequencies under various fields of view. The horizontal axis represents spatial frequency (unit: lp/mm), while the vertical axis represents the MTF value. It can be seen from the figure that the MTF value of this embodiment remains above 0.5 across the entire field of view. Within the range of 0 to 160 lp/mm, the MTF curve evenly and smoothly decreases from the center to the peripheral field of view, and exhibits superior imaging quality and excellent capability to resolve details in both low-frequency and high-frequency situations.

FIG. 18 illustrates the lateral chromatic aberration curve diagram of Embodiment 3, which represents the chromatic aberration of various wavelengths relative to the central wavelength (0.55µm) at different image heights on the projection plane. The horizontal axis represents the lateral chromatic aberration values (unit: µm) of various wavelengths relative to the central wavelength, while the vertical axis indicates the normalized field of view. It can be seen from the figure that the lateral chromatic aberrations of the longest and shortest wavelengths are controlled within 0 to 5µm, indicating that the projection lens assembly can effectively correct chromatic aberrations in the peripheral field of view and the secondary spectrum of the entire image plane.

### Embodiment 4

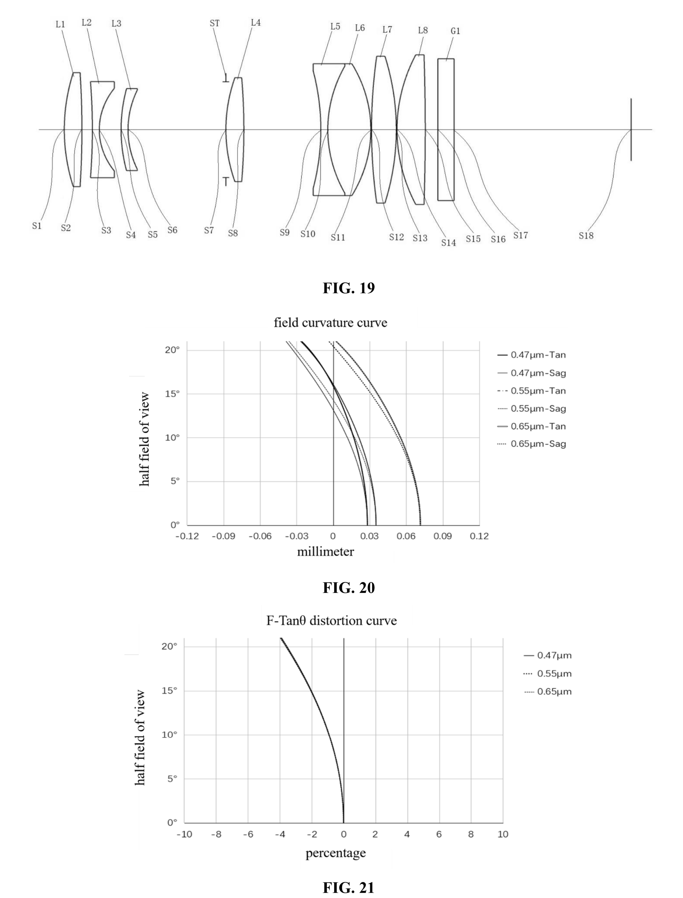

Please refer to FIG. 19, which illustrates the structural schematic diagram of the projection lens assembly provided in Embodiment 4 of the present application. The projection lens assembly includes: a first lens L1, a second lens L2, a third lens L3, a diaphragm ST, a fourth lens L4, a fifth lens L5, a sixth lens L6, a seventh lens L7, an eighth lens L8, and an optical filter G1, which are arranged in sequence from the projection plane to the image-source plane along the optical axis. The first lens L1, the second lens L2, and the third lens L3 form a front lens group with negative focal power. The first lens L1 has positive focal power, and both a projection side surface S1 and an image-source side surface S2 thereof are convex surfaces; the second lens L2 has negative focal power, and both a projection side surface S3 and an image-source side surface S4 thereof are concave surfaces; the third lens L3 has negative focal power, a projection side surface S5 thereof is a convex surface, and an image-source side surface S6 thereof is a concave surface.

The fourth lens L4, the fifth lens L5, the sixth lens L6, the seventh lens L7, and the eighth lens L8 form a rear lens group with positive focal power. The fourth lens L4 has positive focal power, and both a projection side surface S7 and an image-source side surface S8 thereof are convex surfaces; the fifth lens L5 has negative focal power, and both a projection side surface S9 and an image-source side surface S10 thereof are concave surfaces; the sixth lens L6 has positive focal power, and both a projection side surface S10 and an image-source side surface S11 thereof are convex surfaces; the fifth lens L5 and sixth lens L6 form a cemented lens group, where the cemented surface between the image-source side surface of the fifth lens L5 and the projection side surface of the sixth lens L6 is denoted as S10; the seventh lens L7 has positive focal power, and both a projection side surface S12 and an image-source side surface S13 thereof are convex surfaces; the eighth lens L8 has positive focal power, and both a projection side surface S14 and an image-source side surface S15 thereof are convex surfaces.

Both the projection side surface S16 and the image-source side surface S17 of the optical filter G1 are planes.

The image-source plane S18 is a plane.

The relevant parameters of each lens in the projection lens assembly of Embodiment 4 are shown in Table 4-1.

**Table 4-1**

| Surface number | Surface Name | Surface type | Radius of curvature R (mm) | Thickness D/ distance L (mm) | Refractiv e index Nd | Abbe number Vd |
|---|---|---|---|---|---|---|
| | projection plane | plane | infinite | 140.40 | | |
| S1 | first lens L1 | spherical surface | 34.94 | 2.53 | 1.83 | 42.73 |
| S2 | | spherical surface | -167.60 | 1.50 | | |
| S3 | second lens L2 | spherical surface | -117.21 | 1.00 | 1.80 | 46.57 |
| S4 | | spherical surface | 11.85 | 3.13 | | |
| S5 | third lens L3 | spherical surface | 29.48 | 1.00 | 1.77 | 49.61 |
| S6 | | spherical surface | 16.72 | 14.05 | | |
| ST | diaphragm ST | plane | infinite | -0.01 | | |
| S7 | fourth lens L4 | spherical surface | 29.06 | 2.58 | 1.78 | 25.72 |
| S8 | | spherical surface | -116.87 | 11.04 | | |
| S9 | fifth lens L5 | spherical surface | -43.25 | 1.00 | 2.00 | 25.44 |
| S10 | sixth lens L6 | spherical surface | 23.68 | 6.18 | 1.59 | 68.35 |
| S11 | | spherical surface | -23.03 | 0.10 | | |
| S12 | seventh lens L7 | spherical surface | 99.21 | 3.55 | 1.60 | 65.46 |
| S13 | | spherical surface | -45.66 | 0.10 | | |
| S14 | eighth lens L8 | spherical surface | 29.64 | 4.06 | 1.60 | 65.46 |
| S15 | | spherical surface | -425.08 | 1.80 | | |
| S16 | optical filter G1 | plane | infinite | 2.35 | 1.50 | 63.40 |
| S17 | | plane | infinite | 25.40 | | |
| S18 | image-sour ce plane | plane | infinite | | | |

In this embodiment, the field curvature curve diagram, F-Tanθ distortion curve, relative illuminance curve diagram, MTF curve diagram, and lateral chromatic aberration curve diagram of the projection lens assembly are shown in FIG.s 20, 21, 22, 23, and 24, respectively.

FIG. 20 illustrates the field curvature curve of Embodiment 4, which represents the degree of bending of light beams with different wavelengths on the meridional and sagittal image planes. The horizontal axis represents the offset (unit: mm), and the vertical axis represents the half field of view (unit: °). It can be seen from the figure that the field curvatures of the meridional and sagittal image planes are controlled within -0.06mm to 0.09mm, indicating that the projection lens assembly can effectively correct the field curvatures.

FIG. 21 illustrates the F-Tanθ distortion curve of Embodiment 4, which represents the F-Tanθ distortion of light beams with different wavelengths at different image heights on the projection plane. The horizontal axis represents the F-Tanθ distortion (unit: %), while the vertical axis represents the half field of view (unit: °). It can be seen from the figure that the F-Tanθ distortion of the projection lens assembly is controlled within -4% to 0, and the image compression in the peripheral angle area is relatively smooth, which effectively improves the clarity of the expanded image.

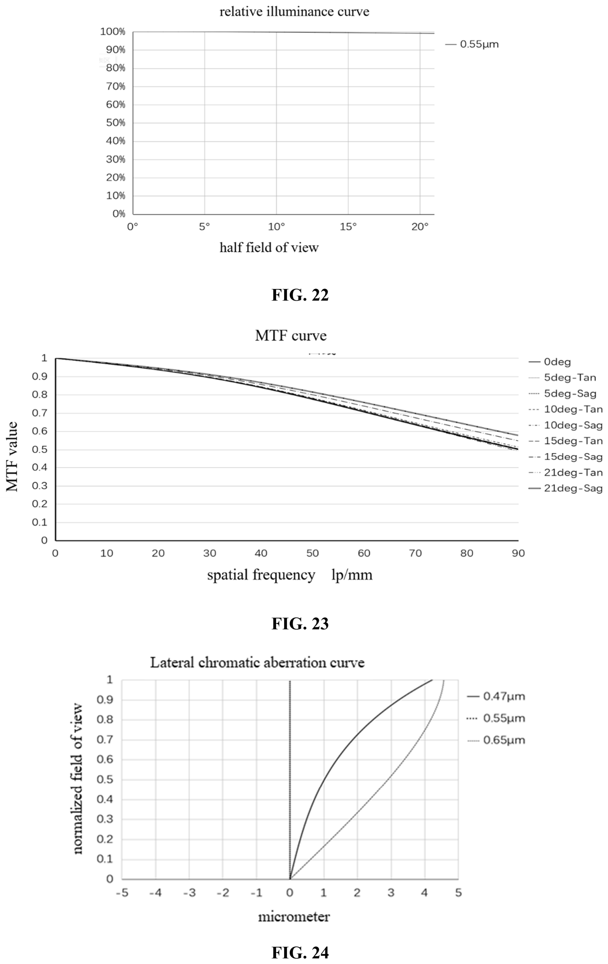

FIG. 22 illustrates the relative illuminance curve of Embodiment 4, representing the relative illuminance values at different angles of the field of view on the projection plane. The horizontal axis denotes the half field of view (unit: °), while the vertical axis indicates the relative illuminance (unit: %). It can be seen from the figure that the relative illuminance value of the projection lens assembly remains above 95% even at the maximum half field of view, indicating that the projection lens assembly exhibits good relative illuminance.

FIG. 23 illustrates the Modulation Transfer Function (MTF) curve diagram of Embodiment 4, which represents the imaging modulation degree of the lens assembly at different spatial frequencies under various fields of view. The horizontal axis represents spatial frequency (unit: lp/mm), while the vertical axis represents the MTF value. It can be seen from the figure that the MTF value of this embodiment remains above 0.5 across the entire field of view. Within the range of 0 to 160 lp/mm, the MTF curve evenly and smoothly decreases from the center to the peripheral field of view, and exhibits superior imaging quality and excellent capability to resolve details in both low-frequency and high-frequency situations.

FIG. 24 illustrates the lateral chromatic aberration curve diagram of Embodiment 4, which represents the chromatic aberrations of various wavelengths relative to the central wavelength (0.55µm) at different image heights on the projection plane. The horizontal axis represents the lateral chromatic aberration values (unit: µm) of various wavelengths relative to the central wavelength, and the vertical axis represents the normalized field of view. It can be seen from the figure that the lateral chromatic aberrations of the longest and shortest wavelengths are controlled within 0 to 5µm, indicating that the projection lens assembly can effectively correct the chromatic aberrations in the peripheral field of view and the secondary spectrum of the entire image plane.

Please refer to Table 5, which shows the optical characteristics corresponding to each of the aforementioned embodiments, including the effective focal length f, total optical length TTL, f-number FNO, image height IH, and maximum field of view FOV of the projection lens assembly, as well as the numerical value corresponding to each conditional expression in each embodiment.

**Table 5**

| Parameters and conditional expressions | Embodiment 1 | Embodiment 2 | Embodiment 3 | Embodiment 4 |
|---|---|---|---|---|
| f(mm) | 14.05 | 13.93 | 13.62 | 13.78 |
| FOV(°) | 40.00 | 40.34 | 41.15 | 42.30 |
| EPD(mm) | 7.89 | 7.96 | 7.65 | 7.88 |
| TTL(mm) | 81.44 | 81.43 | 81.41 | 81.35 |
| FNO | 1.78 | 1.75 | 1.78 | 1.75 |
| IH(mm) | 9.92 | 9.92 | 9.92 | 10.32 |
| CRA(°) | 1.99 | 2.00 | 2.04 | 1.69 |
| BFL | 34.63 | 34.35 | 33.99 | 33.70 |
| Throw ratio | 1.22 | 1.22 | 1.22 | 1.17 |
| TTL/f | 5.80 | 5.85 | 5.98 | 5.90 |
| TTL/IH | 8.21 | 8.21 | 8.21 | 7.89 |
| (IH/2)/(f×tan(FOV/2)) | 0.97 | 0.97 | 0.97 | 0.97 |
| FOV/FNO(°) | 22.48 | 23.05 | 23.12 | 24.17 |
| IH/EPD | 1.26 | 1.25 | 1.30 | 1.31 |
| IH/f | 0.71 | 0.71 | 0.73 | 0.75 |
| BFL/f | 2.46 | 2.47 | 2.50 | 2.45 |
| BFL/TTL | 0.36 | 0.36 | 0.36 | 0.36 |
| ∑CT/TTL | 0.27 | 0.29 | 0.35 | 0.27 |
| f1/f | 2.36 | 3.29 | 6.61 | 2.51 |
| f2/f | -1.20 | -1.27 | -1.95 | -0.96 |
| f3/f | -2.58 | -2.96 | -1.99 | -3.74 |
| f4/f | 3.90 | 3.10 | 2.20 | 2.15 |
| f5/f | -1.56 | -1.41 | -1.02 | -1.09 |
| f6/f | 1.57 | 1.41 | 1.37 | 1.50 |
| f7/f | 6.62 | 9.68 | 3.71 | 3.78 |
| f8/f | 2.44 | 2.43 | 2.75 | 3.33 |
| F1/F2 | -2.01 | -2.28 | -4.86 | -0.72 |

Based on the aforementioned embodiments, the projection lens assembly provided by the present application, through reasonable configuration of the surface types of various lenses and reasonable matching of the focal power of various lenses, has a small throw ratio, which can make the distance between the projection lens assembly and the projection screen reach a smaller value, achieving larger size of image display within a shorter projection distance; additionally, the distortion is less, thereby improving the resolving power of the projection lens assembly, reducing aberrations, and increasing relative illuminance, so that the projected image is uniform in brightness and higher in overall illuminance, avoiding the occurrence of vignetting, being beneficial for visibility under strong sunlight, and having good projection effects.

In the description of this specification, references to terms such as "one embodiment", "some embodiments", "an example", "a specific example", or "some examples" indicate that the specific features, structures, materials, or characteristics described in conjunction with that embodiment or example are included in at least one embodiment or example of the present application. In this specification, the illustrative expressions of the aforementioned terms do not necessarily refer to the same embodiment or example. Furthermore, the specific features, structures, materials, or characteristics described can be combined in any suitable manner in one or more embodiments or examples.

The embodiments described above merely represent several implementation modes of the present application, and descriptions thereof are relatively specific and detailed. However, this should not be construed as a limitation on the scope of the patent application. It should be noted that for those skilled in the art, several variations and improvements can be made without departing from the concept of the present application, which all fall within the protection scope of the present application. Therefore, the scope of protection of the patent application should be determined by the appended claims.

## Claims

1. A projection lens assembly, comprising eight lenses, and **characterized in that** the eight lenses comprise: a first lens, a second lens, a third lens, a fourth lens, a fifth lens, a sixth lens, a seventh lens, and an eighth lens, which are arranged in sequence from a projection plane to an image-source plane along an optical axis, wherein,
the first lens has positive focal power, and has a projection side surface being a convex surface;
the second lens has negative focal power, and has an image-source side surface being a concave surface;
the third lens has negative focal power, and has a projection side surface being a convex surface and an image-source side surface being a concave surface;
the fourth lens has positive focal power, and has a projection side surface being a convex surface;
the fifth lens has negative focal power, and has a projection side surface being a concave surface and an image-source side surface being a concave surface;
the sixth lens has positive focal power, and has a projection side surface being a convex surface and an image-source side surface being a convex surface;
the seventh lens has positive focal power, and has a projection side surface being a convex surface and an image-source side surface being a convex surface;
the eighth lens has positive focal power, and has a projection side surface being a convex surface and an image-source side surface being a convex surface;
a throw ratio of the projection lens assembly ranges from 1.1 to 1.4.

2. The projection lens assembly of claim 1, **characterized in that**, an effective focal length f and an optical back focal length BFL of the projection lens assembly satisfy: 2.4<BFL/f<2.6.

3. The projection lens assembly of claim 1, **characterized in that**, a total optical length TTL of the projection lens assembly and a sum ΣCT of central thicknesses of the first to eighth lenses along the optical axis satisfy: 0.2 < ΣCT/TTL < 0.4.

4. The projection lens assembly of claim 1, **characterized in that**, an effective focal length f of the projection lens assembly and a focal length f1 of the first lens satisfy: 2<f1/f<7.

5. A projection lens assembly, comprising eight lenses, and **characterized in that** the eight lenses comprise: a first lens, a second lens, a third lens, a fourth lens, a fifth lens, a sixth lens, a seventh lens, and an eighth lens, which are arranged in sequence from a projection plane to an image-source plane along an optical axis, wherein,
the first lens has positive focal power, and has a projection side surface being a convex surface;
the second lens has negative focal power, and has an image-source side surface being a concave surface;
the third lens has negative focal power, and has a projection side surface being a convex surface and an image-source side surface being a concave surface;
the fourth lens has positive focal power, and has a projection side surface being a convex surface;
the fifth lens has negative focal power, and has a projection side surface being a concave surface and an image-source side surface being a concave surface;
the sixth lens has positive focal power, and has a projection side surface being a convex surface and an image-source side surface being a convex surface;
the seventh lens has positive focal power, and has a projection side surface being a convex surface and an image-source side surface being a convex surface;
the eighth lens has positive focal power, and has a projection side surface being a convex surface and an image-source side surface being a convex surface;
a total optical length TTL and an effective focal length f of the projection lens assembly satisfy: 5.5<TTL/f<6.0.

6. The projection lens assembly of claim 5, **characterized in that**, the effective focal length f and an optical back focal length BFL of the projection lens assembly satisfy: 2.4<BFL/f<2.6.

7. The projection lens assembly of claim 5, **characterized in that**, the total optical length TTL of the projection lens assembly and a sum ΣCT of central thicknesses of the first to eighth lenses along the optical axis satisfy: 0.2 < ΣCT/TTL < 0.4.

8. A projection lens assembly, comprising eight lenses, and **characterized in that** the eight lenses comprise: a first lens, a second lens, a third lens, a fourth lens, a fifth lens, a sixth lens, a seventh lens, and an eighth lens, which are arranged in sequence from a projection plane to an image-source plane along an optical axis, wherein,
the first lens has positive focal power, and has a projection side surface being a convex surface;
the second lens has negative focal power, and has an image-source side surface being a concave surface;
the third lens has negative focal power, and has a projection side surface being a convex surface and an image-source side surface being a concave surface;
the fourth lens has positive focal power, and has a projection side surface being a convex surface;
the fifth lens has negative focal power, and has a projection side surface being a concave surface and an image-source side surface being a concave surface;
the sixth lens has positive focal power, and has a projection side surface being a convex surface and an image-source side surface being a convex surface;
the seventh lens has positive focal power, and has a projection side surface being a convex surface and an image-source side surface being a convex surface;
the eighth lens has positive focal power, and has a projection side surface being a convex surface and an image-source side surface being a convex surface;
an effective focal length f of the projection lens assembly, a maximum field of view FOV, and an image-source plane height IH corresponding to the maximum field of view satisfy: 0.96<(IH/2)/(f×tan(FOV/2))<1.0.

9. The projection lens assembly of claim 8, **characterized in that**, the effective focal length f and an optical back focal length BFL of the projection lens assembly satisfy: 2.4<BFL/f<2.6.

10. The projection lens assembly of claim 8, **characterized in that**, a total optical length TTL of the projection lens assembly and a sum ΣCT of central thicknesses of the first to eighth lenses along the optical axis satisfy: 0.2 < ΣCT/TTL < 0.4.

11. A projection lens assembly, comprising eight lenses, and **characterized in that** the eight lenses comprise: a first lens, a second lens, a third lens, a fourth lens, a fifth lens, a sixth lens, a seventh lens, and an eighth lens, which are arranged in sequence from a projection plane to an image-source plane along an optical axis, wherein,
the first lens has positive focal power, and has a projection side surface being a convex surface;
the second lens has negative focal power, and has an image-source side surface being a concave surface;
the third lens has negative focal power, and has a projection side surface being a convex surface and an image-source side surface being a concave surface;
the fourth lens has positive focal power, and has a projection side surface being a convex surface;
the fifth lens has negative focal power, and has a projection side surface being a concave surface and an image-source side surface being a concave surface;
the sixth lens has positive focal power, and has a projection side surface being a convex surface and an image-source side surface being a convex surface;
the seventh lens has positive focal power, and has a projection side surface being a convex surface and an image-source side surface being a convex surface;
the eighth lens has positive focal power, and has a projection side surface being a convex surface and an image-source side surface being a convex surface;
a maximum field of view FOV and an f-number FNO of the projection lens assembly satisfy: 20° < FOV/FNO < 26°.

12. The projection lens assembly of claim 11, **characterized in that**, an effective focal length f and an optical back focal length BFL of the projection lens assembly satisfy: 2.4<BFL/f<2.6.

13. The projection lens assembly of claim 11, **characterized in that**, a total optical length TTL of the projection lens assembly and a sum ΣCT of central thicknesses of the first to eighth lenses along the optical axis satisfy: 0.2 < ΣCT/TTL < 0.4.

14. A projection lens assembly, comprising a diaphragm and eight lenses, and **characterized in that** the eight lenses comprise: a first lens, a second lens, a third lens, a fourth lens, a fifth lens, a sixth lens, a seventh lens and an eighth lens, which are arranged in sequence from a projection plane to an image-source plane along an optical axis, wherein,
the first lens has positive focal power, and has a projection side surface being a convex surface;
the second lens has negative focal power, and has an image-source side surface being a concave surface;
the third lens has negative focal power, and has a projection side surface being a convex surface and an image-source side surface being a concave surface;
the fourth lens has positive focal power, and has a projection side surface being a convex surface;
the fifth lens has negative focal power, and has a projection side surface being a concave surface and an image-source side surface being a concave surface;
the sixth lens has positive focal power, and has a projection side surface being a convex surface and an image-source side surface being a convex surface;
the seventh lens has positive focal power, and has a projection side surface being a convex surface and an image-source side surface being a convex surface;
the eighth lens has positive focal power, and has a projection side surface being a convex surface and an image-source side surface being a convex surface;
the diaphragm is provided between the third lens and the fourth lens, or between the fourth lens and the fifth lens;
a plurality of lenses located between the diaphragm and the projection plane form a front lens group with negative focal power, and a plurality of lenses located between the diaphragm and the image-source plane form a rear lens group with positive focal power; a combined focal length F1 of the front lens group and a combined focal length F2 of the rear lens group satisfy: -5.0 < F1/F2 < -0.6.

15. The projection lens assembly of claim 14, **characterized in that**, an effective focal length f and an optical back focal length BFL of the projection lens assembly satisfy: 2.4<BFL/f<2.6.

16. The projection lens assembly of claim 14, **characterized in that**, a total optical length TTL of the projection lens assembly and a sum ΣCT of central thicknesses of the first to eighth lenses along the optical axis satisfy: 0.2 < ΣCT/TTL < 0.4.
